# EUROPÄISCHE PATENTSCHRIFT

(11) **EP 0 696 443 B1**
(45) Veröffentlichungstag und Bekanntmachung des Hinweises auf die Patenterteilung: **30.06.1999**
(21) Anmeldenummer: 95111790.2
(22) Anmeldetag: 26.07.1995
(51) Int. Cl.: A61C 1/05

(54) **Zahnärztlicher Turbinenantrieb mit Mitteln zur selbsttätigen Drehzahlregelung**
Dental turbine drive with means for automatic speed control
Moteur à turbine avec moyens pour contrôle de vitesse automatique

(30) Priorität: 08.08.1994 DE 4428039
(43) Veröffentlichungstag der Anmeldung: 14.02.1996
(73) Patentinhaber: Sirona Dental Systems GmbH, 64625 Bensheim (DE)
(72) Erfinder: Wohlgemuth, Jürgen, D-64283 Darmstadt (DE)
(74) Vertreter: Isenbruck, Günter, Dr.

(56) Entgegenhaltungen:
- DE-C- 4 320 532
- US-A- 3 865 505

## Beschreibung

Die Erfindung bezieht sich auf einen zahnärztlichen Turbinenantrieb, der ein in Lagern geführtes Laufrad enthält, dessen Turbinenschaufeln in bekannter Weise über eine Düse mit Druckluft beaufschlagbar sind und der im Strömungsweg der Abluft ein Stellmittel zur Regelung der Drehzahl aufweist.

Aus der US-PS 3 865 505 ist ein Turbinenantrieb mit Regeleinrichtung bekannt, bei der im Zuleitungskanal der Antriebsdruckluft ein Ventil angeordnet ist, welches in Abhängigkeit vom Volumendurchsatz der Rückluft gesteuert wird. Sinkt durch ein äußeres Moment (bei Belastung) die Drehzahl der Turbine, so wird das Ventil im Zuleitungskanal geöffnet und dadurch ein größeres Luftvolumen zum Laufrad der Turbine geleitet. Die von der Rückluft abhängige Regelung des Zuluftstromes kann bei der bekannten Turbine auf verschiedene Weise erfolgen, u.a. über einen federbelasteten Schieber im Rückluftkanal, der das Ventil im Zuluftkanal steuert oder über eine im Rückluftkanal angeordnete Membran/Druckdose, die einen den Durchfluß in der Zuleitung steuernden Kolben verstellt. Mit dieser bekannten Regeleinrichtung kann die Drehzahl lastunabhängig konstant gehalten werden. Die Einrichtung ist u.a. mit dem Nachteil behaftet, daß zur Drosselung des gesamten Luftstromes relativ große Kräfte notwendig sind, die sich im Abluftkanal nur unter Einsatz von Volumen und Masse aufbringen lassen. Damit wird aber ein instabiles Regelverhalten der Tubine geschaffen. Des weiteren bedingt die bekannte Einrichtung einen relativ großen Aufbau innerhalb des Turbinenhandstückes, wodurch es zu Einbauproblemen kommen kann.

In der EP-A-0 630 620, welche einen Hand der Technik gemäß Art. 54(3)(4) EPÜ darstellt, ist ein zahnärztlicher Turbinenantrieb beschrieben, bei dem zur Drehzahlregelung am rotierenden Teil des Laufrades ein Stellmittel angeordnet ist, welches bei Rotation des Laufrades seine Form und/oder Lage infolge Zentrifugalkraft derart ändert, daß der wirksame Querschnitt steigender Drehzahl abnimmt und mit sinkender Drehzahl zunimmt.

Der Regelvorgang beruht im wesentlichen darauf, daß die zur Regelung erforderlichen Stellkräfte aus den drehzahlabhängigen Zentrifugalkräften resultieren, die auf das am Rotor angeordnete, an sich passive Stellelement so wirken, daß der wirksame Strömungsquerschnitt für den Luftstrom drehzahlabhängig verändert wird. Bei vorgegebener Solldrehzahl sind die zu erzielenden maximalen Stellkräfte und Stellwege nur über die mechanischen Eigenschaften des Stellmittels (Masse, Elastizitätsmodul, Formgebung) und damit nur im begrenzten Maße beeinflußbar. Dies trifft insbesondere zu bei Verwendung von handelsüblichen, elastisch verformbaren Ringen (O-Ringe). Die sich damit ergebenden Regelabweichungen von der gewünschten Solldrehzahl können unter Umständen relativ groß sein.

Der im Anspruch 1 angegebenen Erfindung liegt die Aufgabe zugrunde, demgegenüber eine Verbesserung zu erzielen und dafür zu sorgen, daß die Regelabweichungen möglichst klein gehalten werden können.

Gemäß der Erfindung ist der der Treibluft zugewandte Teil der Laufradkammer über Kanäle mit einer weiteren Kammer verbunden, die zumindest partiell von einem unter Druck nachgiebigen Element begrenzt ist, und zwar derart, daß eine auf das Element wirkende Druckänderung in der Laufradkammer eine Bewegung des Elements hervorruft, welche die Wirkung des Stellmittels unterstützt. Damit wird der zur Regelung benutzte direkte Effekt der Zentrifugalkraft durch zusätzliche Wirkung der im Antriebssystem vorhandenen Druckluft verstärkt. Das Element, welches auf das Stellmittel einwirkt und eine zusätzliche Kraftkomponente erzeugt, kann in einer vorteilhaften Ausführung eine federelastische Membran sein, die zusammen mit dem Stellmittel eine Membrankammer begrenzt, in die über Verbindungskanäle Druckluft aus dem Rotorraum eingeleitet wird. Die so über den Luftdruck in der Rotorkammer realisierte Regelverstärkung wirkt in Abhängigkeit von der Drosselung des Abluftstromes, hervorgerufen durch das Stellelement, und damit auch in Abhängigkeit von Drehzahlabweichung. Die Membran kann aus Federstahl bestehen und mit dem Stellmittel mechanisch verbunden sein. Weitere vorteilhafte Ausgestaltungen und Weiterbildungen der Erfindung ergeben sich aus den Unteransprüchen und der nachfolgenden Beschreibung mehrerer Ausführungsbeispiele der Erfindung. Es zeigen:
Figuren 1 und 2 ein erstes Ausführungsbeispiel,
Figuren 3 und 4 ein zweites Ausführungsbeispiel,
Figuren 5 und 6 ein drittes Ausführungsbeispiel.

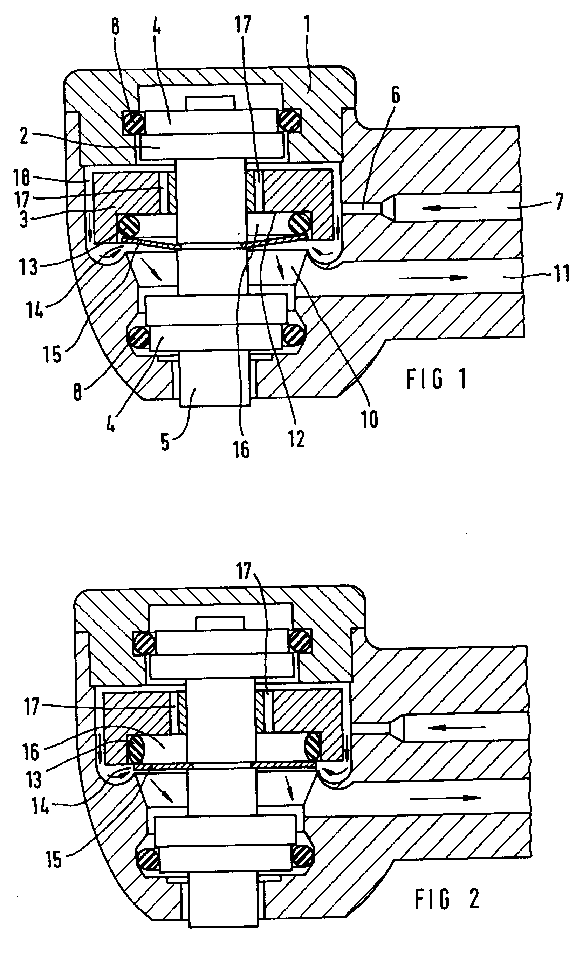

Die Figur 1 zeigt in einem Längsschnitt einen Teil eines zahnärztlichen Turbinenhandstückes, bei dem im Kopfgehäuse 1 in bekannter Weise eine Turbinenantriebseinheit 2 gelagert ist. Die Antriebseinheit 2 enthält ein Laufrad 3, welches auf einer in Lagern 4 gelagerten Welle 5 aufgesetzt ist und am Umfang eine Vielzahl von Turbinenschaufeln aufweist, die nach dem bekannten Freistrahlprinzip über eine Düse 6 aus einem Zufuhrkanal 7 mit Druckluft beaufschlagt werden. Die gesamte Antriebseinheit 2 ist mittels elastischer Ringe 8 schwin gungsgedämpft im Kopfgehäuse 1 fixiert. Die zugeführte Druckluft wird nach Durchströmen der Turbinenschaufeln des Laufrades über einen Abströmkanal 10 in einen Rückluftkanal 11 geleitet.

Das Laufrad 3 enthält, dem Abströmkanal 10 zugewandt, eine konzentrisch zur Welle 5 verlaufende Ausnehmung 12, in der ein federelastischer Ring 13 (O-Ring) als Stellmittel für eine selbsttätige Drehzahlregelung angeordnet ist. Die Elastizität des Ringes 13 ist so gewählt, daß sich seine Form und/oder Lage in der Ausnehmung 12 durch die Wirkung der Zentrifugalkraft so ändert, daß bei höheren Drehzahlen der wirksame Querschnitt am Ringspalt 14 des Abströmkanals 10 verkleinert und bei zurückgehender Drehzahl vergrößert wird. Der Ring 13 ist hierzu in der Ausnehmung so eingelegt, daß er an die Außenwandung der Aussparung gepreßt wird. Sein in Ruhezustand kreisförmiger Querschnitt verändert sich mit zunehmender Drehzahl zu einem Oval (Fig. 2), wodurch sich der den wirksamen Querschnitt bildende Ringspalt 14 zwischen Laufrad und Gehäuse verringert.

An der Rotorwelle 5 ist eine federelastische Membrane 15 befestigt, die mit peripheren Wandungen am Ring 13 anliegt und mit diesem und dem Laufrad eine Membrankammer 16 bildet, die über ein oder mehrere, achsparallel zur Rotorwelle verlaufende Kanäle 17 im Laufrad mit der Rotorkammer 18 verbunden sind. Die Membrankammer 16 ist durch die federelastische Membran zum Abströmkanal hin abgedichtet. Infolge der Verbindung der Rotorkammer mit der Membrankammer wirken sich Druckänderungen in der Rotorkammer auf die Membrane aus, indem diese, wie in den Figuren 1 und 2 dargestellt, mit zunehmender Drehzahl in axialer Richtung verstellt wird. Die durch die Fliehkraft erzeugte Wirkung, die eine Verformung des Ringes 13 zur Folge hat, wird durch eine gleichgerichtete Membrankraft zusätzlich verstärkt.

Die Membran kann aus einem geeigneten Federstahl oder auch aus einem gummielastischen Material, z.B. aus Silikonmaterial, gefertigt sein.

Zweckmäßigerweise ist die Elastizität der beiden Teile so aufeinander abgestimmt, daß die Teile miteinander kontaktieren. Die Membran 15 kann auch mit einer gewissen Vorspannung am Ring 13 anliegen.

Vorteilhaft kann es auch sein, wenn Ring 13 und Membran 15 durch eine geeignete Verbindung (Verschweißen,Verkleben,etc.) miteinander verbunden sind.

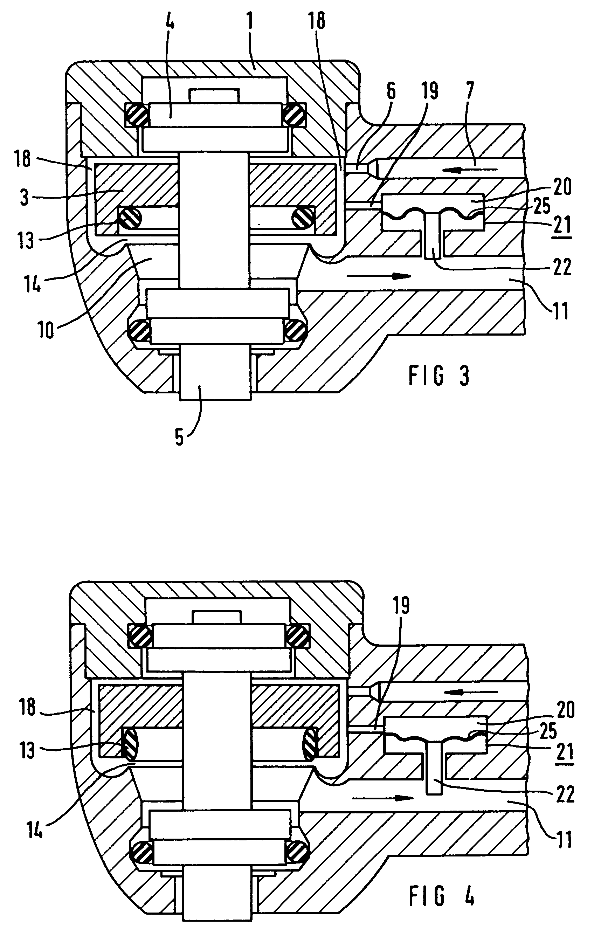

Die Figuren 3 und 4 zeigen eine zweite Variante, bei der der Innendruck der Rotorkammer 18 auf ein Drosselventil 21 wirkt, mit dem der Rückluftstrom gedrosselt werden kann. Das Drosselventil ist hier als Membranventil ausgebildet, bei dem die obere Kammer 20 über eine Verbindungsleitung 19 mit der Rotorkammer 18 verbunden ist. Mit dem in den Rückluftkanal 11 ragenden, mit der Membran 25 verbundenen Stellelement 22 kann der Querschnitt des Rückluftkanals 11 verändert werden. Wenn z.B. bei steigender Drehzahl der Luftdruck in der Rotorkammer ansteigt, bewirkt dies bei Erreichen der Solldrehzahl über die Drosselstelle eine verstärkte Verengung des Rückluftquerschnittes (Fig. 4) und damit eine Verstärkung der erwünschten Drehzahlbegrenzung. Der O-Ring wirkt dabei als Vorsteuerung für die Drosselstelle am Drosselventil 21.

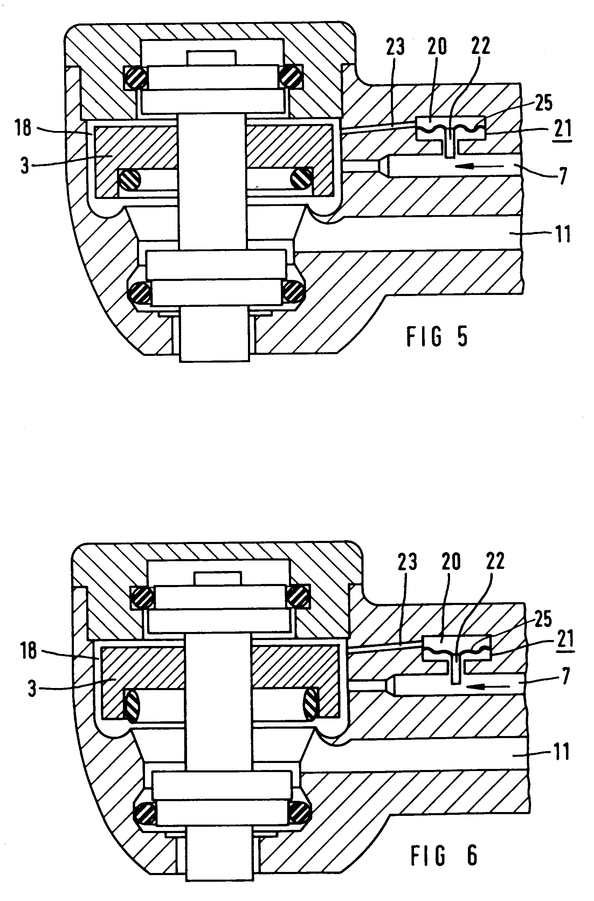

Die Figuren 5 und 6 zeigen eine weitere Variante, bei der das vorgenannte beschriebene Membranventil 21 so angeordnet ist, daß das mit der Membran 25 verbundene Stellelement 22 in den Zufuhrkanal 7 der Treibluft ragt. Auch hier wirken Druckänderungen in der Rotorkammer 18 über einen Verbindungskanal 23 auf das Membranventil 21, welches den Treibluftstrom im Sinne einer Drehzahlregelung beeinflußt.Steigt beispielsweise mit zunehmender Drehzahl der Druck in der Rotorkammer 18 an, wird die Treibluftzufuhr leicht gedrosselt , mit der Folge, daß diese Drosselung einem weiteren Drehzahlanstieg entgegenwirkt. Entsprechendes gilt auch bei fallender Drehzahl.

## Patentansprüche

1. Zahnärztlicher Turbinenantrieb, enthaltend ein in Lagern (4) geführtes Laufrad (3), welches mit dem Gehäuse(1) eine Laufradkammer (18) begrenzt und dessen Turbinenschaufeln über eine Treibluftdüse (6) mit Druckluft beaufschlagbar sind, wobei im Strömungsweg der Abluft am Laufrad (3) ein federelastisches Stellelement (13) angeordnet ist, welches sich in Abhängigkeit von der Drehzahl unter dem Einfluß der Zentrifugalkraft verformt und dadurch den wirksamen Strömungsquerschnitt mit steigender Drehzahl verengt und mit sinkender Drehzahl erweitert, wodurch der Luftdruck in dem der Treibluftdüse (6) zugewandten Teil der Laufradkammer (18) entsprechend der Drosselwirkung steigt bzw. sinkt, und wobei dieser der Treibluftdüse (6) zugewandte Teil der Laufradkammer (18) über Kanäle (17, 19, 23) mit einer weiteren Kammer (16, 20) verbunden ist, die zumindest partiell von einem unter Druck nachgiebigen Element (15, 25) begrenzt ist, derart, daß eine auf das Element (15, 25) wirkende Druckänderung in der Laufradkammer eine Bewegung des Elements (15, 25) hervorruft, welche die Wirkung des Stellelements (13) unterstützt.

2. Turbinenantrieb nach Anspruch1, wobei als nachgiebiges Element eine federelastische Membran (15, 25) vorgesehen ist.

3. Turbinenantrieb nach Anspruch 2, wobei bei Verwendung eines federelastischen Ringes (13) als Stellelement, der in einer stirnseitigen Ausnehmung (12) des Laufrades (3) angeordnet ist und der sich in Abhängigkeit von der Drehzahl aufgrund der Zentrifugalkraft in axialer Richtung innerhalb der Ausnehmung (12) ausdehnen kann, der Ring (13) zur Abströmseite hin von der ferelastischen Membran (15) bedeckt ist, und die durch Membran (15), Ring (13) und Laufrad (3) begrenzte Membrankammer (16) über die Kanäle (17) mit der Rotorkammer (18) verbunden ist.

4. Zahnärztlicher Turbinenantrieb nach Anspruch 2, wobei die Membran (15) mit Vorspannung am Stellmittel (13) anliegt.

5. Zahnärztlicher Turbinenantrieb nach Anspruch 4, wobei eine Membran aus Federstahl verwendet ist.

6. Zahnärztlicher Turbinenantrieb nach Anspruch 2, wobei die Membran (15) mit dem Stellmittel (13) mechanisch verbunden ist.

7. Zahnärztlicher Turbinenantrieb nach Anspruch 6, wobei Membran (15) und Stellmittel (13) einteilig ausgebildet sind.

8. Zahnärztlicher Turbinenantrieb nach Anspruch 2 oder 3, wobei im nicht rotierenden Teil des Gehäuses (1) ein Membranventil (21) angeordnet ist, deren Druckkammer (20) über einen Verbindungskanal (19,23) mit der Rotorkammer (18) verbunden ist, und dessen mit der Membran (25) verbundenes Stellelement (22) in Abhängigkeit vom Druck in der Rotorkammer (18) den wirksamen Querschnitt im Abluft-(11) oder Zufuhrkanal (7) der Treibluft verändert.

## Claims

1. Dental turbine drive, containing a rotor disc (3) which is guided in bearings (4) and, together with the housing (1), delimits a rotor-disc chamber (18), and the turbine blades of which can be exposed to compressed air via a driving-air nozzle (6), a resilient adjustment element (13) being arranged on the rotor disc (3) in the flow path of the outgoing air, which adjustment element is deformed, as a function of the rotational speed, under the influence of the centrifugal force and, as a result, narrows the effective cross section of flow as the rotational speed increases and widens the effective cross section of flow as the rotational speed falls, with the result that the air pressure in that part of the rotor-disc chamber (18) which faces the driving-air nozzle (6) rises or falls in accordance with the throttling action, and the said part of the rotor-disc chamber (18) which faces the driving-air nozzle (6) being connected, via passages (17, 19, 23), to a further chamber (16, 20), which is at least partially delimited by an element (15, 25) which yields under pressure, in such a manner that a change in pressure, acting on the element (15, 25), in the rotor-disc chamber causes a movement of the element (15, 25), which movement supports the action of the adjustment element (13).

2. Turbine drive according to Claim 1, in which a resilient diaphragm (15, 25) is provided as the yielding element.

3. Turbine drive according to Claim 2, in which, when the adjustment element used is a resilient ring (13) which is arranged in an end-side recess (12) in the rotor disc (3) and, owing to the centrifugal force, is able to expand in the axial direction inside the recess (12) as a function of the rotational speed, the ring (13) is covered, towards the outlet side, by the resilient diaphragm (15), and the diaphragm chamber (16), which is delimited by diaphragm (15), ring (13) and rotor disc (3), is connected to the rotor chamber (18) via the passages (17).

4. Dental turbine drive according to Claim 2, in which the diaphragm (15) bears against the adjustment means (13) in a preloaded manner.

5. Dental turbine drive according to Claim 4, in which a diaphragm made of spring steel is used.

6. Dental turbine drive according to Claim 2, in which the diaphragm (15) is mechanically connected to the adjustment means (13).

7. Dental turbine drive according to Claim 6, in which diaphragm (15) and adjustment means (13) are designed as a single part.

8. Dental turbine drive according to Claim 2 or 3, in which a diaphragm valve (21) is arranged in the non-rotating part of the housing (1), the pressure chamber (20) of which valve is connected to the rotor chamber (18) by way of a connecting passage (19, 23), and the adjustment element (22), which is connected to the diaphragm (25), of which valve changes the effective cross section in the outlet passage (11) or feed passage (7) for the driving air as a function of the pressure in the rotor chamber (18).

## Revendications

1. Dispositif d'entraînement de turbine de dentisterie, contenant un rotor (3) guidé dans des paliers (4) et qui, avec le carter (1), définit une chambre (18) pour le rotor et dont les aubes peuvent être chargées par de l'air comprimé par l'intermédiaire d'une buse d'air d'entraînement (6), dans lequel un élément de réglage (13) présentant l'élasticité d'un ressort est disposé dans la voie de circulation de l'air sortant au niveau du rotor (3), élément de réglage qui se déforme en fonction de la vitesse de rotation sous l'influence de la force centrifuge et rétrécit de ce fait la section transversale efficace de passage lorsque la vitesse de rotation augmente et élargit cette section transversale lorsque la vitesse de rotation diminue, ce qui a pour effet que la pression de l'air augmente ou diminue dans la partie de la chambre (18) du rotor associée à la buse d'air d'entraînement (6), en fonction de l'action d'étranglement, et dans lequel cette partie de la chambre (18) du rotor, qui est tournée vers la buse d'air d'entraînement (6), est reliée par des canaux (17,19,23) à une autre chambre (16,20) qui est limitée au moins partiellement par un élément (15,25), qui fléchit sous l'action de la pression, de telle sorte qu'une variation de pression, qui agit sur l'élément (15,25), provoque dans la chambre du rotor un déplacement de l'élément (15,25) qui assiste l'action de l'élément de réglage (13).

2. Dispositif d'entraînement de turbine selon la revendication 1, dans lequel il est prévu comme élément flexible une membrane (15,25) présentant l'élasticité d'un ressort.

3. Dispositif d'entraînement de turbine selon la revendication 2, dans lequel dans le cas de l'utilisation d'une bague (13) présentant l'élasticité d'un ressort en tant qu'élément de réglage, qui est disposé dans un évidement frontal (12) du rotor (3) et qui peut se dilater dans la direction axiale à l'intérieur de l'évidement (12) en fonction de la vitesse de rotation, sur la base de la force centrifuge, la bague (13) est recouverte, du côté évacuation, par une membrane (15) présentant l'élasticité d'un ressort, et la chambre à membrane (16), qui est délimitée par la membrane (15), la bague (13) et le rotor (3), est reliée par l'intermédiaire des canaux (17) à la chambre (18) du rotor.

4. Dispositif d'entraînement de turbine de dentisterie selon la revendication 2, dans lequel la membrane (15) s'applique sous précontrainte contre l'élément de réglage (13).

5. Dispositif d'entraînement de turbine de dentisterie selon la revendication 4, dans lequel on utilise une membrane formée d'un acier pour ressorts.

6. Dispositif d'entraînement de turbine de dentisterie selon la revendication 2, dans lequel la membrane (15) est reliée mécaniquement à l'élément de réglage (13).

7. Dispositif d'entraînement de turbine de dentisterie selon la revendication 6, dans lequel la membrane (15) et l'élément de réglage (13) sont réalisés d'un seul tenant.

8. Dispositif d'entraînement de turbine de dentisterie selon la revendication 2 ou 3, dans lequel dans la partie non tournante du carter (1) est disposée une soupape à membrane (21), dont la chambre de pression (20) est reliée par l'intermédiaire d'un canal de liaison (19,23) à la chambre (18) du rotor et dont l'élément de réglage (22), qui est relié à la membrane (25), modifie, en fonction de la pression dans la chambre (18) du rotor, la section transversale efficace dans le canal d'évacuation (11) ou dans le canal d'amenée (7) pour l'air d'entraînement.
